Europäisches Patentamt

European Patent Office

Office européen des brevets

(11) Veröffentlichungsnummer : **0 017 816**
**B1**

## (12) EUROPÄISCHE PATENTSCHRIFT

(45) Veröffentlichungstag der Patentschrift :
03.11.82

(21) Anmeldenummer : 80101605.6

(22) Anmeldetag : 26.03.80

(51) Int. Cl.³ : **G 05 D 13/62**, **H 02 P 7/74**,
**H 02 P 1/54**

(54) Einrichtung zum Ändern der relativen Phasenwinkellagen von Arbeitswellen eines elektrischen Gruppenantriebes.

(30) Priorität : 12.04.79 DE 2915035

(43) Veröffentlichungstag der Anmeldung :
29.10.80 (Patentblatt 80/22)

(45) Bekanntmachung des Hinweises auf die Patenterteilung : 03.11.82 Patentblatt 82/44

(84) Benannte Vertragsstaaten :
AT BE CH DE FR GB IT NL SE

(56) Entgegenhaltungen :
CH A 405 475
DE A 2 811 292

(73) Patentinhaber : SIEMENS AKTIENGESELLSCHAFT
Berlin und München
Postfach 22 02 61
D-8000 München 22 (DE)

(72) Erfinder : Krampe, Dietrich
Goldwitzerstrasse 58
D-8524 Neunkirchen (DE)
Erfinder : Schleicher, Herbert
Zielgelhütte 2
D-7418 Dettingen (DE)

Imprimerie Jouve, 18, rue St-Denis, 75001 Paris, France

Einrichtung zum Ändern der relativen Phasenwinkellagen von Arbeitswellen eines elektrischen Gruppenantriebes

Die Erfindung bezieht sich auf einen elektrischen Gruppenantrieb, bei dem die einzelnen Arbeitswellen mit Synchronmotoren gekuppelt sind, die an einen statischen Betriebsumrichter anschließbar sind, dessen Ausgangsspannung in Frequenz- und Phasenlage von der Steuerfrequenz eines Frequenzgebers abhängig ist.

Zum Ändern der relativen Phasenwinkellage der Arbeitswellen ist hier ein zweiter, mit gleicher Spannungsamplitude arbeitender Hilfsumrichter (Phasenschieberumrichter) vorgesehen, der zunächst an den gleichen Frequenzgeber wie der Betriebsumrichter angeschlossen wird. Der in der Phasenwinkellage zu verändernde Synchronmotor wird auf den Phasenschieberumrichter geschaltet und dessen Frequenz im Sinne der gewünschten Änderung der Phasenwinkellage nach Umschaltung auf einen zweiten Frequenzgeber verändert.

Beim Erreichen der gewünschten Winkellage ist der Phasenschieberumrichter wieder an den Frequenzgeber des Betriebsumrichters anschließbar, wenn die über eine Phasenschiebereinrichtung erfaßten Phasenlagen der Ausgangsspannungen der Umrichter übereinstimmen. Anschließend wird der Synchronmotor wieder auf den Betriebsumrichter zurückgeschaltet.

Bei dieser Anordnung dient also der zusätzliche Umrichter zu Phasenwinkelkorrektur einzelner Motoren in bezug auf die Phasenwinkellage eines Führungsmotors.

Eine Einrichtung dieser Art ist in der nicht vorveröffentlichten DE-A1-2811292 näher beschrieben.

Es ist ferner eine Anfahr- und Bremseinrichtung bekannt, mit der Gleichstrommotoren in einen mit Betriebsdrehzahl laufenden Gruppenverband hinein- oder herausgenommen werden können. Hierzu dient eine gesonderte steuerbare Stromquelle mit zugeordneter Strom- und Spannungsregelung, mit der die einzelnen Motoren vom Stillstand bis zur Betriebsdrehzahl hochgefahren bzw. von der Betriebsdrehzahl bis zum Stillstand abgebremst werden können (vgl. CH-A-405 475).

Es tritt häufig die Forderung auf, daß auch relativ große Synchronmotoren auf ein Umrichternetz geschaltet werden müssen, das mit Betriebsfrequenz von z.B. 150 Hertz läuft. Um eine derartige Zuschaltung zulassen zu können, wäre eine wesentliche Vergrößerung der Betriebsumrichterleistung erforderlich. Außerdem treten u.U. unzulässig hohe thermische Belastungen der Motoren infolge der Schlupfverluste auf.

Die Aufgabe der vorliegenden Erfindung besteht darin, eine Einrichtung der eingangs genannten Art so auszugestalten, daß eine Hereinnahme von Motoren in den mit Betriebsfrequenz laufenden Gruppenverband oder eine Herausnahme aus diesem Verband ohne besonderen Mehraufwand möglich ist.

Diese Aufgabe wird erfindungsgemäß dadurch gelöst, daß der Hilfsumrichter durch eine dem zweiten Frequenzgeber vorgeschaltete Hochlauf- und Bremssteuerschaltung auch als Hochlauf- und Bremsumrichter aus steuerbar ist.

Der zusätzliche Hilfsumrichter hat demnach eine dreifache Funktion, und zwar als Phasenschieberumrichter, als Hochfahrumrichter und als Bremsumrichter. In jeder dieser drei Funktionen arbeitet der zusätzliche Umrichter synchron zum Betriebsumrichter, wenn die Last die Speisesysteme wechselt. Damit ist ein quasi stoßfreier Übergang gesichert; eine Voraussetzung für Umrichter kleiner Leistung und eine Schonung der Motoren. Erwähnt sei auch noch, daß die Bremsfunktion als Invertierung der Hochfahrfunktion praktisch überhaupt keinen Mehraufwand bedeutet.

Anhand einer Zeichnung sei die Erfindung näher erläutert; es zeigen:

Figur 1 den Leistungsteil des Mehrmotorenantriebes,

Figur 2 die drei Arbeitsbereiche des Hilfsumrichters,

Figur 3 die schaltungsmäßige Steuerung und Verknüpfung der beiden Umrichter,

Figur 4 die Frequenzverläufe beim Hochfahrvorgang und

Figur 5 die Frequenzverhältnisse beim Bremsvorgang.

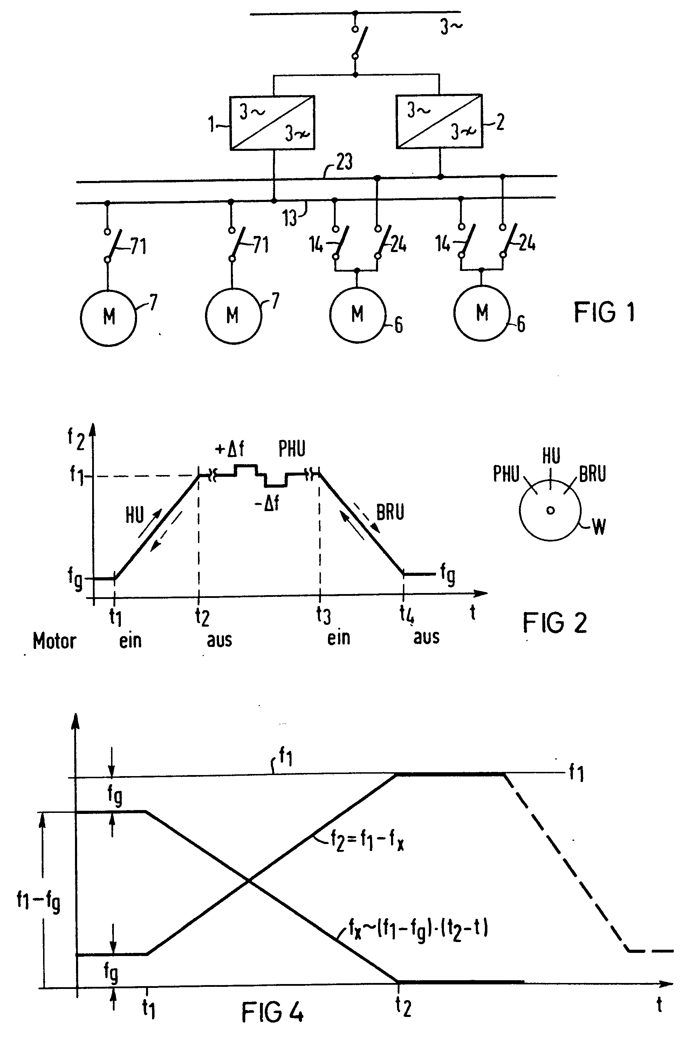

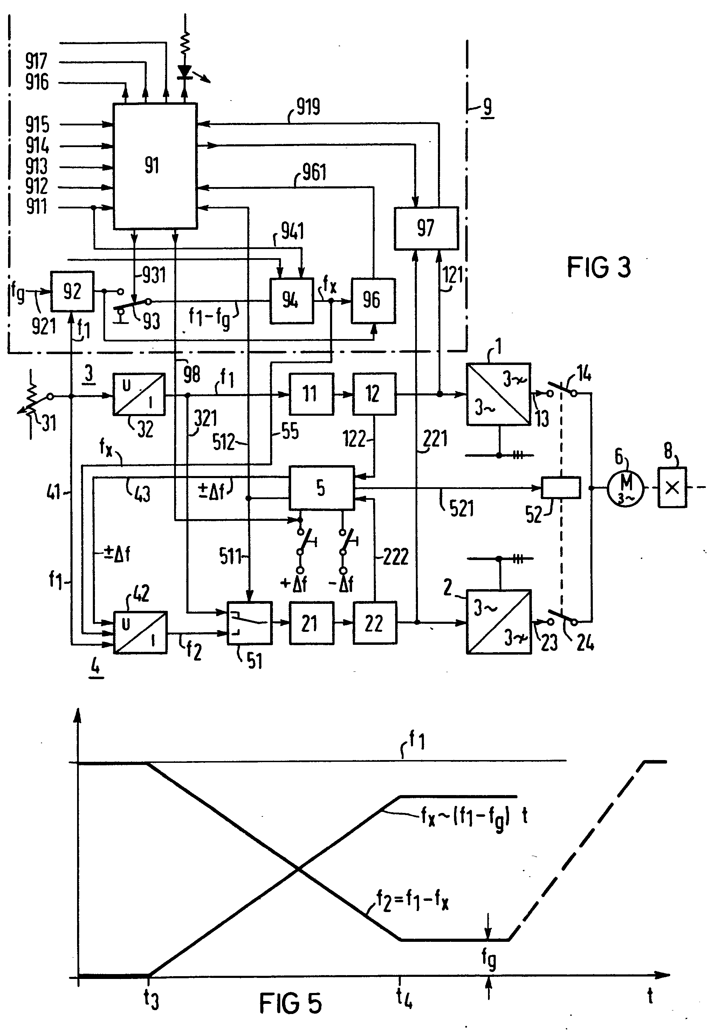

Figur 1 zeigt die leistungsseitige Verknüpfung zwischen Betriebsumrichter 1, Hilfsumrichter 2 und Synchronmotoren 6 und 7. Die Umrichter sind in an sich bekannter Weise als statische Umrichter mit Thyristoren aufgebaut, haben gleiche Amplituden der Ausgangsspannung, jedoch in der Regel unterschiedliche Leistungen.

Es sind zwei frequenzvariable Versorgungsschienen 13 und 23 vorgesehen, die jeweils von den Umrichtern 1 und 2 gespeist werden. An die Schiene 13 sind über Schalter 71 alle Synchronmotoren 7 angeschlossen, deren Winkellage zueinander zwar starr, aber im Winkelbetrag beliebig sein kann. Eine Winkelkorrektur kann hier entfallen. Die von den Motoren 6 angetriebenen, nicht gezeigten Arbeitswellen müssen dagen in der Winkellage zueinander — je nach der technologischen Situation — verändert werden und anschließend starr verzahnt weiterlaufen. Diese Motoren sind über Schalter (Schütze) 14, 24 wahlweise an die Versorgungsschienen 13 oder 23 anschließbar. Im allgemeinen muß die Freizügigkeit der Motorenzuschaltung auf den Betriebsumrichter bei jedem Frequenzeinstellbereich gegeben sein. Bei leistungsschwachen Motoren, z.B. Motoren 7, ist dies jederzeit möglich. Bei relativ leistungsstarken Motoren 6 muß jedoch die Direktzuschaltung bei jeder Frequenz mit Rücksicht auf die hohen Anlaufströme eingeschränkt bzw. ganz unterbunden werden. Hier bietet sich eine Lösung mit einem Hochfahrumrichter an.

Hierfür wird der Hilfsumrichter 2 benutzt, der jetzt als Hochfahrumrichter dient. Bei Invertierung der Hochfahrfunktion kann auch die Funktion der Bremsung erfüllt werden.

Der hierzu erforderliche Frequenzverlauf über der Zeit in der Umrichterfrequenz f2 des Hilfsumrichters 2 ist in Figur 2 gezeigt. In der Stellung des Wahlschalters W auf Betriebsart « HU » Hochfahrumrichter wird im Zeitpunkt t1 die hochzufahrende Last bei der Frequenz $f_g$ zugeschaltet. Anschließend wird der Umrichter 2 mit der Last hochgefahren und erreicht im Zeitpunkt t2 die Frequenz f1 des Umrichters 1. Zu diesem Zeitpunkt wird nach Synchronisierung der beiden Umrichtersysteme die Umschaltung vom Umrichter 2 auf den Umrichter 1 freigegeben. Soll der Motor in der Phasenwinkellage korrigiert werden, so wird durch Umschaltung des Wahlschalters W auf die Stellung « PHU » der Phasenschiebervorgang durch Frequenzveränderung $\pm\Delta$ f eingeleitet.

Soll zum Zeitpunkt $t_3$ einer der Motoren 6 abgebremst werden, so wird der Wahlschalter auf die Stellung « BRU » gestellt und der jetzt als Bremsumrichter wirkende Umrichter 2 übernimmt vom Betriebsumrichter 1 synchron den Motor 6 und bremst ihn bis zur Frequenz $f_g$ ab. Im Zeitpunkt t4 wird dann die Last abgeworfen und der Motor stillgesetzt. Der Bremsumrichter läuft jetzt sofort auf die Frequenz f1 des Umrichters 1 hoch und geht in Wartestellung für einen weiteren Bremsvorgang.

Die schaltungsmäßige Realisierung der vorstehenden Funktionen ist in Figur 3 näher gezeigt. Bei dieser Anordnung ist der über ein Getriebe 8 eine nichtgezeigte mechanische Last treibende Synchronmotor 6 wahlweise über die Schalter 14 und 24 und Schienen 13, 23 an den Betriebsumrichter 1 oder den Umrichter 2 anschließbar : Die Steuerung der Schalter 14 und 24 wird dabei durch eine Verriegelungssteuerung 52 vorgenommen.

Eine an einem Potentiometer 31 abgreifbare, der gewünschten Betriebsfrequenz $f_1$ proportionale Spannung wird in einem Spannungsfrequenzumsetzer 32 in die Pulsfrequenz $f_1$ umgesetzt. Die Pulse des aus Potentiometer 31 und Spannungsfrequenzumsetzer 32 bestehenden Frequenzgebers 3 werden über einen Frequenzteiler 11 einem Ringverteiler 12 zugeführt. Dieser Ringverteiler 12 bildet einen wesentlichen Teil der Steuerlogik des Umrichters 1, und zwar steuert dieser Ringverteiler die Abgabe der Zündbefehle an die Thyristoren. Er bestimmt damit Frequenz und Phasenlage der Ausgangsspannung des Betriebsumrichters 1.

An den gleichen Frequenzgeber 3 mit der Frequenz f1 ist über eine elektronische Weiche 51 und über einen Frequenzteiler 21 auch der Ringverteiler 22 des Umrichters 2 anschließbar. Durch Umschalten der Weiche 51 ist der Ringverteiler 22 mit einem zweiten Frequenzgeber 4 verbindbar. Dieser Frequenzgeber 4 besteht aus einem Spannungsfrequenzumsetzer 42, der über eine Leitung 41 seine Spannung ebenfalls vom Potentiometer 31 erhält. Damit liefert der Frequenzgeber 4 die gleiche Steuerfrequenz wie der Frequenzgeber 3. Die Umschaltung der Weiche 51 über die Leitung 511, die Steuerung der Verriegelungseinrichtung 52 über Leitung 521 und ein frequenzsteuernder Eingriff in den Frequenzgeber 4 über Leitung 43 werden von einer Phasenschiebereinrichtung 5 bewirkt, die den Stand der Ringverteiler 12, 22 abfragt.

Fernerhin ist noch ein Hochlauf- und Bremszusatz 9 vorgesehen, dessen Funktion späterhin erläutert wird.

Anhand von Figur 3 sei zunächst die Funktion der Phasenschiebung hinsichtlich eines Einzelmotors 6 näher erläutert :

Betriebsumrichter 1 und Umrichter 2 werden an das Drehstromnetz geschaltet und laufen mit der durch den Frequenzgeber 3 bedingten Betriebsfrequenz f1 auf der Leitung 321. Da beide Umrichter über die gleiche Leitfrequenz gespeist werden, herrscht Frequenzgleichheit.

Über den laufenden Phasenvergleich der Ringverteiler 12, 22 ist auch sichergestellt, daß beide Umrichter 1, 2 in der Phasenlage an ihren Ausgangsklemmen übereinstimmen, d.h. es herrscht auch Phasengleichheit. Die Verriegelungseinrichtung 52 gibt die Schalter 14, 24 nur frei wenn durch die Phasenschiebereinrichtung 5 über Leitung 521 laufen die Phasengleichheit gemeldet wird. Es soll nun der Motor 6 und damit die mit ihm gekuppelte Arbeitswelle in der Phasenlage verändert werden. Hierzu wird der Motor 6 vom Betriebsumrichter 1 auf den Umrichter 2 übergeben, d.h. der Schalter 14 wird geöffnet und der Schalter 24 geschlossen. Wegen der Frequenz- und Phasengleichheit wird die Übergabe praktisch stoßfrei ohne Winkelfehler vorgenommen.

Beim Betätigen eines der Druckknöpfe für $+\Delta F$ oder $-\Delta F$ wird der Umrichter 2 vom Frequenzgeber 3 getrennt und über die Frequenzweiche 51 auf den Frequenzgeber 4 mit der Frequenz f2 geschaltet. Mit der Umschaltung wird über Leitungen 43 ein Zusatzsollwert $+\Delta f$ oder $-\Delta f$ auf den Spannungsfrequenzumsetzer 42 gegeben ; d.h. der Synchronmotor 6 wird beschleunigt oder verzögert. Hat die mit dem Synchronmotor 6 gekuppelte Arbeitswelle die entsprechende Winkelposition erreicht, wird der über die Druckknöpfe $\pm\Delta F$ gegebene Befehl aufgehoben. Jetzt läuft der Frequenzgeber 4 in etwa wieder mit der Frequenz des Frequenzgebers 3 zuzüglich einer definierten Driftfrequenz. Die Phasenschiebereinrichtung 5 fragt auf den Leitungen 122, 222 die Phasenlagen von f1 und f2 der Ringverteiler 12 und 22 ab und schaltet bei Übereinstimmung durch Kommando auf Leitung 511 die Frequenzweiche 51 innerhalb einer Frequenzperiode vom Frequenzgeber 4 auf den Frequenzgeber 3 um. Damit ist auf elektrischem Wege wieder der absolute Gleichlauf hergestellt.

Zusätzlich zu dieser Schaltung, in der der Umrichter 2 als Phasenschieberumrichter dient (Betriebsart PHU) ist noch ein Hochlauf- und Bremszusatz 9 vorgesehen, mit dem der Umrichter 2 auch als Hochfahrumrichter (Betriebsart HU) oder Bremsumrichter (Betriebsart BRU) betrieben werden kann. Wie bereits erwähnt, ist die Betriebsart dabei mit einem Wahlschalter W einstellbar.

Der Hochlauf- und Bremszusatz 9 besteht im wesentlichen aus einer speicherorientierten Kontrollogik 91, in die folgende Informationen eingegeben werden können :

Auf Leitung 915 die Anwahl des Betriebszustandes Phasenschieben.

Auf Leitung 914 die Anwahl des Betriebszustandes Bremsen.

Auf Leitung 913 die Anwahl des Betriebszustandes Hochfahren.

Auf Leitung 912 die Meldung « Last ist zugeschaltet ».

Auf Leitung 911 die Meldung « Überstrom ».

Auf Leitung 919 die Meldung « Frequenzgleichheit $f_1 = f_2$ der beiden Umrichter 1 und 2 ».

Die Frequenzgleichheit wird von dem Frequenzvergleicher 97 über Leitungen 121 und 221 erfaßt.

Auf der Leitung 961 wird das Erreichen einer vorgegebenen Grundfrequenz $f_g$ gemeldet.

Aus diesen Eingangssignalen bildet die Kontrollogik 91 folgende Befehle :

Auf Leitung 916 Freigabe der Lastzuschaltung ; geht auf Schütze 14 und 24.

Auf Leitung 917 Freigabe der Lastabschaltung ; geht auf Schütze 14 und 24.

Ferner gibt die Kontrollogik 91 auf Leitung 931 noch einen Umschaltbefehl für den Schalter 93 und einen Befehl über die Leitung 98 auf den Drucktaster $+ \triangle F$, um ein Umschalten der Schütze 14 bzw. 24 während des Hochlaufes oder der Bremsung zu verhindern.

Ferner ist im Hochlauf- und Bremszusatz noch ein Kanal zum Hochfahren der Frequenz f2 für den Umrichter 2 von der Grundfrequenz $f_g$ im Zeitpunkt t1 zur Betriebsfrequenz $f_1$ im Zeitpunkt t2 und zum Herabfahren der Frequenz im Zeitpunkt $t_3$ von der Betriebsfrequenz auf die Grundfrequenz im Zeitpunkt $t_4$ vorgesehen.

Der Kanal zur Bildung einer zusätzlichen Frequenzkomponente $f_x$ besteht aus einem Differenzbildner 92, in dem eine Spannung gebildet wird, die der Differenz zwischen einer der Grundfrequenz $f_g$ entsprechenden Spannung und einer der Betriebsfrequenz $f_1$ proportionalen Spannung entspricht. Die Differenzspannung wird über einen Schalter 93 auf einen Hochlauf- oder Abfahrintegrator 94 gegeben, dessen Ausgangssignal $f_x$ auf den frequenzbestimmenden Spannungsfrequenzumsetzer 42 gelangt. Das Ausgangssignal des Integrators 94 wird auch gleichzeitig mit der Differenzspannung verglichen und hieraus in einer Vergleichsstufe 96 das Signal : Grundfrequenz $f_g$ erreicht, gebildet, das auf Leitung 961 zur Kontrollogik 91 gelangt.

Die Wirkungsweise der Anordnung ist die folgende : In der Betriebsart « PHU » — Phasenschieben — ist der Schalter 93 geöffnet, damit ist die $f_x$ proportionale Spannung am Ausgang des Integrators 94 Null. Änderungen der Frequenz

$\pm \triangle f$ werden, wie vorstehend erläutert, durch die Phasenschiebereinrichtung 5 zum Zwecke der Synchronisation bewirkt.

In der Betriebsart HU steht der Umrichter 2 mit seiner Frequenz f2 auf dem Wert $f_g$ (Fig. 4). Kommt das Kommando zum Hochlaufen, wird zunächst der Motor 6 über das Schütz 24 an den Umrichter 2 angeschlossen. Nach Abklingen des Anlaufstromes beginnt der Hochlauf des Umrichters 2 von der Frequenz $f_g$ auf die Betriebsfrequenz f1 des Umrichters 1. Dazu muß dem die Frequenz des Umrichters 2 bestimmten Spannungsfrequenzumsetzer 42 die der Frequenz $f_x$ proportionale Zusatzspannung über den Integrator 94 eingegeben werden. Diese Zusatzspannung ist am Beginn des Hochlaufes groß und sinkt dann auf Null ab (Fig. 4). Sollten sich beim Hochlaufvorgang Überströme ergeben, so wird der Integrationsvorgang über die Leitung 941 angehalten, bis die Überströme abgeklungen sind. Hat der Umrichter 2 die Frequenz f1 des Umrichters 1 erreicht — erfaßt durch den Frequenzvergleicher 97 — so werden beide Umrichter 1, 2 nach Freigabe der Sperrleitung 98 aufeinander synchronisiert, und zwar wie bei der Beschreibung in der Phasenschieberfunktion näher erläutert. Ist der Synchronisationszustand erreicht, wird die Frequenzweiche 51 auf den Frequenzgeber 3 umgeschaltet, damit herrscht wieder Phasengleichlauf. Anschließend wird der Motor 6 selbsttätig durch das Signal auf Leitung 917 vom Umrichter 2 abgekuppelt und an den Umrichter 1 angeschlossen, d.h. Schütz 24 aus, Schütz 14 ein. Nach der Abschaltung des Schützes 24 schaltet die Frequenzweiche 51 den Umrichter 2 wieder an den Spannungsfrequenzumsetzer 42, so daß der Umrichter 2 mit seinem eigenen Frequenzgeber 4 auf der gestrichelten Linie auf die Grundfrequenz zurückfahren und in Wartestellung gehen kann.

Für den Bremsvorgang, d.h. die Funktionsart « BRU » des Umrichters 2 gelten die zum Hochlauf invertierten Verhältnisse (vgl. Figur 5). Dazu muß der Wahlschalter auf Stellung « BRU » stehen. Der Betriebsumrichter 1 läuft bei Betriebsfrequenz f1 mit seiner Last. Der Umrichter 2 steht nach Zuschalten bei der Frequenz f1 in Wartestellung. Der Umrichter 2 wird dabei über die Frequenzweiche 51 von dem Frequenzgeber 3 mit der Frequenz $f_1$ wie Umrichter 1 gespeist ; damit herrscht Phasengleichheit und die Leitung 916 gibt die Lastumschaltung frei. Damit kann der Motor 6 stoßfrei vom Umrichter 1 auf den Umrichter 2 umgeschaltet werden. Die Frequenzweiche 51 schaltet dann den Umrichter 2 auf den Frequenzgeber 4 mit der Frequenz f2 um. Nach dem Abklingen des Übergangsstromes wird der Motor 6 von der Frequenz f1 auf die Frequenz $f_g$ herabgefahren, wobei im Zusatzkanal eine $f_x$ proportionale Zusatzspannung (Figur 5) erzeugt werden muß. Nach Erreichen der Grundfrequenz $f_g$ wird über Leitung 917 das Schütz 24 geöffnet, der Motor 6 bleibt stehen. Der Umrichter 2 fährt dann anschließend schnell wieder von der Grund-

frequenz f$_g$ zur Betriebsfrequenz f1 hoch, wird mit dem Umrichter 1 synchronisiert und geht in Wartestellung.

**Ansprüche**

1. Einrichtung bei einem elektrischen Gruppenantrieb, bei dem die einzelnen Arbeitswellen mit Synchronmotoren (6, 7) gekuppelt sind, die an einen statischen Betriebsumrichter (1) anschließbar sind, dessen Ausgangsspannung in Frequenz- und Phasenlage von der Steuerfrequenz eines Frequenzgebers (3) abhängig ist, bei der ein zweiter, mit gleicher Spannungsamplitude arbeitender Hilfsumrichter (2) vorgesehen ist, der an den gleichen Frequenzgeber (3) wie der Betriebsumrichter (1) anschließbar ist, ein in der Phasenwinkellage zu verändernder Synchronmotor (16) ohne spürbaren Phasenwinkelfehler auf den Hilfsumrichter (2) schaltbar ist, die Frequenz dieses Hilfsumrichters (2) im Sinne der gewünschten Änderung der Phasenwinkellage nach Umschaltung auf einen zweiten Frequenzgeber (4) veränderbar ist und nach Erreichen der gewünschten Winkellage der Hilfsumrichter (2) dann wieder an den Frequenzgeber (3) des Betriebsumrichters (1) anschließbar ist, wenn die über eine Phasenschiebereinrichtung (5) erfaßten Phasenlagen der Ausgangsspannungen der Umrichter (1, 2) übereinstimmen und der Synchronmotor (16) letztlich auf den Betriebsumrichter (1) zurückschaltbar ist, wobei der Hilfsumrichter (2) durch eine dem zweiten Frequenzgeber (4) vorgeschaltete Hochlauf- und Bremssteuerschaltung (9) auch als Hochlauf- und Bremsumrichter aussteuerbar ist.

2. Einrichtung nach Anspruch 1, dadurch gekennzeichnet, daß der Logikteil (12) des Betriebsumrichters (1) mit dem Frequenzgeber (3) verbunden ist, der Logikteil (22) des Hilfsumrichters (2) über eine von der Phasenschiebereinrichtung (5) gesteuerte Weiche (51) wahlweise mit dem ersten Frequenzgeber (3) oder dem zweiten Frequenzgeber (4) verbunden ist, und daß die Frequenz des zweiten Frequenzgebers (4) durch die Phasenschiebereinrichtung (5) oder durch einen zusätzlichen Hochlauf- und Bremszusatz (9) aussteuerbar ist.

3. Einrichtung nach Anspruch 2, dadurch gekennzeichnet, daß der Hochlauf- und Bremszusatz (9) eine speicherorientierte Kontrollogik (91) für die einzelnen Abläufe und eine Integriereinrichtung (94) zum Verändern der Frequenz des zweiten Frequenzgebers (4) umfaßt.

**Claims**

1. Device for an electrical group drive, in which the individual working waves are coupled to synchronous motors (6, 7), which can be connected to a static operating frequency converter (1), whose output voltage is dependent in frequency position and phase position on the control frequency of a frequency emitter (3), in which a second auxiliary frequency converter (2) operating with the same voltage amplitude is provided, which can be connected to the same frequency emitter (13) as the operating frequency converter (1), a synchronous motor (16) to be altered in the phase angle position can be switched to the auxiliary frequency converter (12) without any traceable phase angle error, the frequency of this auxiliary frequency converter (2) can be altered in the sense of the desired change in phase angle position after switch-over to a second frequency emitter (4), and, after the desired angle position has been reached, the auxiliary frequency converter (2) can then be re-connected to the frequency emitter (3) of the operating frequency converter (1), if the phase positions, determined by means of a phase-shifting device (5), of the output voltages of the frequency converters (1, 2) correspond, and the synchronous motor (16) can finally be switched back to the operating frequency converter (1), whereby the auxiliary frequency converter (2) can also be modulated as a starting-up and braking converter by a starting-up and braking control circuit (9) preceding the second frequency emitter (4).

2. Device according to claim 1, characterised in that the logic section (12) of the operating frequency converter (1) is connected to the frequency emitter (3), the logic section (22) of the auxiliary frequency converter (2) is connected selectively to the first frequency emitter (3) or to the second frequency emitter (4) via a switch (51) controlled by the phase-shifting device (5), and in that the frequency of the second frequency emitter (4) can be modulated by the phase-shifting device (5) or by an additional starting and braking attachment (9).

3. Device according to claim 2, characterised in that the starting and braking attachment (9) comprises a memory-orientated control logic (91) for the individual sequences and an integrating device (94) for altering the frequency of the second frequency emitter (4).

**Revendications**

1. Dispositif pour un entraînement électrique groupé, dans lequel les arbres de travail individuels sont couplés à des moteurs synchrones (6, 7), qui peuvent être raccordés à un convertisseur statique de régime (1), dont la tension de sortie dépend, en fréquence et en position de phase, de la fréquence de commande d'un générateur de fréquence (3) dans lequel est prévu un second convertisseur auxiliaire (2) fonctionnant avec la même amplitude de tension, qui peut être raccordé au même générateur de fréquence (3) que le convertisseur de régime, un moteur synchrone (6) dont la position de l'angle de phase doit être modifiée peut être raccordé sans erreur perceptible de l'angle de phase au convertisseur auxiliaire (2), la fréquence de ce convertisseur auxiliaire (2) peut être modifiée dans le sens de la modification souhaitée de la position de l'angle de phase, après commutation sur un second générateur de fréquence (4), et après obtention de la position angulaire souhaitée du convertisseur auxiliaire (2) peut être raccordée de nouveau au générateur de fréquence (3) du convertisseur de régime (1), lorsque les positions de phase, détectées par l'intermédiaire d'un dispositif déphaseur (5), des tensions de sortie des convertisseurs (1, 2) coïncident, et le moteur synchrone (6) peut finalement être de nouveau commuté sur le convertisseur de régime (1), le convertisseur auxiliaire (2) pouvant être commandé aussi en tant que convertisseur d'accélération et de freinage, au moyen d'un circuit de commande d'accélération et de freinage (9) branché en amont du second générateur de fréquence (4).

2. Dispositif suivant la revendication 1, caractérisé en ce que la partie logique (12) du convertisseur de régime (1) est reliée au générateur de fréquence (3), la partie logique (22) du convertisseur auxiliaire (2) est reliée sélectivement, par l'intermédiaire d'un aiguillage (51) commandé par le dispositif déphaseur (5), avec le premier générateur de fréquence (3) ou le second générateur de fréquence (4), et que la fréquence du second générateur de fréquence (4) peut être commandée par le dispositif déphaseur (5) ou par un dispositif auxiliaire d'accélération et de freinage (9) supplémentaire.

3. Dispositif suivant la revendication 2, caractérisé en ce que le dispositif auxiliaire d'accélération et de freinage (9) comprend une logique de contrôle (9) ayant une fonction de mémoire pour les processus individuels, et un dispositif d'intégration (94) pour modifier la fréquence du second générateur de fréquence (4).

FIG 1

FIG 2

FIG 4

FIG 3

FIG 5